# EUROPÄISCHE PATENTANMELDUNG

(11) **EP 4 481 226 A1**
(43) Veröffentlichungstag der Anmeldung: **25.12.2024**
(21) Anmeldenummer: 24174817.7
(22) Anmeldetag: 08.05.2024
(51) Int. Cl.: F16F 1/38

(54) **ELASTISCHES LAGER MIT LINEAREM VERHALTEN**

(30) Priorität: 07.06.2023 DE 102023114914
(71) Anmelder: Vibracoustic SE, 69469 Weinheim (DE)
(72) Erfinder: Schwarz, Helge, Toppenstedt (DE); Asem, Kaifie, Jork (DE); Herzke, Christoph, Horst (DE)
(74) Vertreter: Patentanwälte Olbricht Buchhold Keulertz

(57) **Zusammenfassung**

Gegenstand der Erfindung ist ein Lager (1) zur schwingungsdämpfenden Lagerung einer Komponente eines Fahrwerks, umfassend einen Kern (2), der sich entlang einer zentralen Längsachse Z des Lagers (1) erstreckt und im Wesentlichen im Längsschnitt keilförmig ausgebildet ist, und eine den Kern (2) umfangsseitig umgebende Hülse (3), wobei zwischen dem Kern (2) und der Hülse (3) mindestens ein Elastomerkörper (4) angeordnet ist, wobei der Elastomerkörper (4) im Längsschnitt eine Elastomerspur (5) aufweist, die entlang einer Keilachse K von einer ersten Stirnseite (6) zu einer zweiten Stirnseite (7) des Lagers (1) verläuft. Das Lager (1) ist vor allem dadurch gekennzeichnet, dass die Elastomerspur (5) entlang der Keilachse K mindestens einen verengten Bereich (8) aufweist, wobei die Spurdicke der Elastomerspur (5) im verengten Bereich (8) geringer ist als die Spurdicke mindestens eines erweiterten Bereichs (9) der Elastomerspur (5).

## Beschreibung

Die Erfindung betrifft ein elastisches Lager, insbesondere ein Keillager, zur schwingungsdämpfenden Lagerung einer Komponente eines Fahrwerks mit linearem Steifigkeitsverhalten.

Elastische Lager der eingangs genannten Art werden in der Praxis verwendet, um ein Fahrzeugteil lagernd an einer Fahrzeugkarosserie, einem Hilfsrahmen, einem Batterieträger oder an irgendeiner anderen Struktur eines Fahrzeugs zu befestigen. Dabei nimmt das Lager zum einen das Gewicht des Fahrzeugteils auf; zum anderen dämpft es die von dem Fahrzeugteil erzeugten Schwingungen. Das Lager erhöht also den Fahrkomfort, indem des sowohl die statische als auch die dynamische Last des Fahrzeugteils aufnimmt. Infolge der statischen Last federt das Lager vor allem in Axialrichtung ein. Dabei wird ein in dem Lager enthaltener elastischer Körper komprimiert. In diesem Zustand spricht man von der "Konstruktionslage" oder "K0-Lage" oder "-Position" des Lagers. Demgegenüber spricht man vom "unbelasteten Zustand" oder vom "unbelasteten Punkt" des Lagers, wenn keine statischen oder dynamischen Lasten auf das Lager wirken.

Bekannte elastomere Keillager besitzen keilförmige, häufig symmetrisch aufgebaute Elastomerpolster. Diese Lager können große axiale Lasten bei verhältnismäßig niedrigen Steifigkeiten aufnehmen und somit hohen translatorischen Belastungen standhalten: Dieses liegt daran, dass die axialen Lasten aufgrund der Keilgeometrie der Elastomerpolster einen hohen Anteil an Druckspannungen in die Polster induzieren. Druckspannungen sind bezüglich der Lebensdauer des Lagers günstiger sind als beispielsweise hohe Zugbeanspruchungen. Sie zeigen jedoch aufgrund der zunehmenden Druckspannungen in den Elastomerpolstern einen stark progressiven Steifigkeitsverlauf. Solch ein progressiver Steifigkeitsverlauf setzt im Verhältnis zur Zielsteifigkeit in der KO-Lage eine niedrigere Anfangssteifigkeit im unbelasteten Zustand voraus, um im Zielpunkt die erwünschte Steifigkeit zu erreichen. Das hat zwar zur Folge, dass im Vergleich zu theoretischen Lagern mit gleichbleibender (also linearer) Steifigkeit bis zum Erreichen der KO-Lage längere Einfederwege erforderlich sind, welche wiederum mit großen Dehnungsbelastungen verbunden sind; auf der anderen Seite würden jedoch bei Lagern mit annähernd linearer Steifigkeit die Scher- und Schubspannungen dominieren und damit die Lebensdauer der Lager negativ beeinflussen. Unter "linearer Steifigkeit" oder "linearem Steifigkeitsverhalten" ist das Verhalten eines elastischen oder federnden Körpers mit konstanter Federrate oder Federkennlinie zu verstehen. Bei einem elastischen Körper mit linearem Steifigkeitsverhalten nimmt die Federkraft des Körpers proportional zum Federweg zu. Demgegenüber zeichnet sich ein progressives Verhalten dadurch aus, dass der elastische Körper unter geringer Krafteinwirkung weich ist und mit zunehmendem Kraftanstieg bzw. mit zunehmendem Federweg steifer wird.

In der Praxis werden häufig axial ausgerichtete, keilförmig angestellte elastische Schubpolster eingesetzt. Sie verhalten sich in axialer Richtung aufgrund der neben den Schubspannungen auftretenden Druckspannungen progressiv und sind bei radialer Belastung verhältnismäßig steif, da in diesem Fall Druck- und Zugspannungen im Elastomerpolster dominieren. Darüber hinaus treten bei herkömmlichen axialen Elastomerpolstern häufig Dehnungskonzentrationen an den stirnseitigen Enden des Polsters auf - insbesondere an der weiten Stirnseite des Keillagers, an der bei einem Einfedern des Kernes Elastomer nach außen verdrängt wird und dort mitunter eine Falte bildet.

EP 0 991 534 A2 offenbart beispielsweise ein Lager mit einem keilförmigen Elastomerpolster, welches entlang seiner Keilachse eine gleichbleibende Dicke aufweist, d. h. die kern- und hülsenseitige Anbindungsflächen des Elastomers verlaufen im Wesentlichen parallel zueinander. Hierdurch verhält sich das Lager progressiv und es kann insbesondere bei großen Einfederwegen keine linear verlaufende Steifigkeit gewährleistet werden. Darüber hinaus führt das vorbekannte Elastomerpolster zu hohen Dehnungskonzentrationen an seinen stirnseitigen Enden, da bei einem axialen Einfedern des Kernes Elastomermaterial entgegen der Einfederrichtung nach außen verdrängt wird, wodurch es zu lokaler Faltenbildung kommen kann.

Der Erfindung liegt daher die Aufgabe zugrunde, ein elastisches Lager bereitzustellen, mit dem sich die Nachteile im Stand der Technik beseitigen lassen und bei dem die Dehnungskonzentrationen auf den stirnseitigen Druckseiten des Elastomerkörpers gegenüber vorbekannten Lösungen reduziert sind, wobei das Lager gleichzeitig nahe seiner KO-Lage einen möglichst linearen Steifigkeitsverlauf aufweisen soll.

Hauptmerkmale der Erfindung sind im kennzeichnenden Teil von Anspruch 1 angegeben. Ausgestaltungen sind Gegenstand der Ansprüche 2 bis 17.

Unter dem Begriff "Lager" ist im Sinne dieser Offenbarung ein Keillager zu verstehen. Die beiden Begriffe werden folglich zur Darstellung der vorliegenden Erfindung synonym verwendet, sofern sich aus dem jeweiligen Kontext nichts Gegenteiliges ergibt. Da sich die Lage eines Fahrzeugs im Betrieb laufend ändert, wird die räumliche Orientierung der vorliegenden Erfindung stets in Bezug auf die KO-Lage angegeben, also auf die Lage des Fahrzeugs, die es in Ruhe auf seinen Rädern stehend hat, sofern sich aus dem jeweiligen Kontext nichts Gegenteiliges ergibt.

Die Aufgabe wird gelöst durch ein Lager gemäß Anspruch 1 zur schwingungsdämpfenden Lagerung einer Komponente eines Fahrwerks. Das erfindungsgemäße Lager umfasst einen Kern, der sich entlang einer zentralen beziehungsweise axialen Längsachse Z des Lagers erstreckt und im Wesentlichen im Längsschnitt keilförmig ausgebildet ist. Das Lager umfasst außerdem eine den Kern umfangsseitig umgebende Hülse, wobei zwischen dem Kern und der Hülse mindestens ein auch als Elastomerpolster bezeichneter Elastomerkörper angeordnet ist und wobei der Elastomerkörper im Längsschnitt eine Elastomerspur aufweist, die entlang einer Keilachse K von einer ersten Stirnseite des Lagers zu einer zweiten Stirnseite des Lagers verläuft. Bei dem erfindungsgemäßen Lager ist vorgesehen, dass die Elastomerspur entlang der Keilachse K mindestens einen verengten Bereich aufweist, wobei die Spurdicke der Elastomerspur im verengten Bereich geringer ist als die Spurdicke mindestens eines erweiterten Bereichs der Elastomerspur. Mit anderen Worten: Die Elastomerspur ist nicht gleichmäßig dick ausgebildet sondern verbreitet sich vom verengten Bereich entlang der Keilachse in Richtung mindestens einer der beiden Stirnseiten. Mit "Spurdicke" wird im Sinne dieser Offenbarung wird dabei die jeweilige Dicke der Elastomerspur entlang einer vom Kern zur Hülse verlaufenden Linie durch die Elastomerspur bezeichnet, wobei die Linie im Wesentlichen senkrecht zur zentralen Längsachse Z verläuft. Als Keilachse K ist die Achse zu verstehen, die im Mittel dem keilförmigen Verlauf der Elastomerspur von der ersten Stirnseite zur zweiten Stirnseite folgt. Der Begriff "Elastomerspur" beschreibt dabei den Elastomerkörper im Längsschnitt des Lagers, also in einem (fiktiven) Schnitt entlang der zentralen Längsachse Z. Die Begriffe "Elastomerspur" und "Elastomerkörper" werden folglich zur Darstellung der vorliegenden Erfindung synonym verwendet, sofern sich aus dem jeweiligen Kontext nichts Gegenteiliges ergibt.

Mit einem derartigen Lager kann verhindert werden, dass der Elastomerkörper bei zunehmender Einfederung an den Stirnseiten, an denen sich die Elastomerspur verbreitet, in unerwünschtem Maße belastet und/oder geschädigt wird. Taucht der keilförmige Kern beispielsweise mit seiner breiten Seite in die Hülse des Lagers ein, so wird der Elastomerkörper an der mit dem breiten Ende des Kernes korrespondierenden Stirnseite entgegen der Einfederrichtung nach außen verdrängt. Dabei entstehen in der Haftzone, also in den Verbindungsbereichen zwischen Elastomer und Kern bzw. zwischen Elastomer und Hülse, hohe Zugdehnungen, die zu Rissen in der Haftzone und somit zu einer geringen Lebensdauer des gesamten Lagers führen können. An der gleichen Stirnseite können durch das Verdrängen des Elastomers nach außen auch besonders kritische Falten auf der Stirnfläche des Elastomerpolsters entstehen, welche ebenfalls aufgrund der Konzentration von hohen Dehnungen zu einem vorzeitigen Ausfall des Elastomerkörpers und somit zu einer geringen Lebensdauer des Lagers führen können, wenn sie nicht minimiert werden.

Auf der zweiten Stirnseite, welche der breiten ersten Stirnseite des Kernes gegenüberliegt, treten hingegen Scher- und vor allem Zugspannungen auf. Auch diese können beim Eintauchen des Kernes in die Hülse des Lagers ein kritisches Niveau erreichen und somit zu einem vorzeitigen Ausfall des Lagers führen. Eine in Richtung der zweiten Stirnseite dicker werdende Elastomerspur hilft, das Dehnungsniveau im Elastomerkörper in diesem Bereich zu reduzieren und einem vorzeitigen Ausfall des Lagers entgegenzuwirken. Im erfindungsgemäßen Lager werden Spannungen und Dehnungen sowie Faltenbildungen im Elastomerkörper, welche das Material des Lagers stark belasten können, minimiert oder ganz vermieden. Das Lager hat außerdem den Vorteil, dass die Dehnungskonzentrationen in dem mindestens einen erweiterten Bereich der Elastomerspur deutlich reduziert werden. Der Elastomerkörper kann aus jedem geeigneten elastischen Material gefertigt sein.

Gemäß einer Weiterentwicklung des Lagers ist vorgesehen, dass die Spurdicke der Elastomerspur im verengten Bereich außerdem geringer ist als die Spurdicken von mindestens zwei erweiterten Bereichen der Elastomerspur. Der verengte Bereich kann auch als Zentralbereich der Elastomerspur bezeichnet werden. Diese Geometrie führt dazu, dass unerwünschte Zugdehnungen auch bei starker Einfederung effektiv und zuverlässig auf beiden Stirnseiten aufgefangen werden, etwa weil eine üblicherweise am stirnseitigen Ende des Elastomerkörpers auftretende Dehnungskonzentration vermindert wird. Ebenso wird das Maß der Faltenbildung am ersten stirnseitigen Ende des Elastomerkörpers minimiert. Auf diese Weise sorgen Elastomerkörper mit einer erfindungsgemäßen Geometrie für eine verlängerte Lebensdauer des Keillagers verglichen mit herkömmlichen Keillagern, die über Elastomerpolster mit gleichmäßiger Spurdicke verfügen. Mit "Spurdicke" wird im Sinne dieser Offenbarung wird dabei die jeweilige Dicke der Elastomerspur entlang einer vom Kern zur Hülse verlaufenden Linie durch die Elastomerspur bezeichnet, wobei die Linie im Wesentlichen senkrecht zur zentralen Längsachse Z verläuft.

Es kann außerdem vorgesehen sein, dass der mindestens eine Elastomerkörper mindestens einen axial verlaufenden Längsschlitz aufweist, also einen Schlitz, der entlang der zentralen Längsachse von einem stirnseitigen Ende des Elastomerkörpers zum anderen stirnseitigen Ende des Elastomerkörpers verläuft. Durch eine solche Ausbildungsform kann eine geteilte Außenhülse eingesetzt werden, welche die Designfreiheit bezüglich einstellbarer Freiwege erweitert und/oder eine radiale Kalibrierung von Elastomerpolstern zur Reduzierung von lokalen Dehnungen in den Bereichen erlaubt, in welche durch das Schließen des Spaltes Druckspannungen induziert werden.

Gemäß einer möglichen Weiterbildung kann der mindestens eine Elastomerkörper im Wesentlichen rotationssymmetrisch zur zentralen Längsachse Z ausgebildet sein. Der mindestens eine Elastomerkörper kann auch dann rotationssymmetrisch ausgestattet sein, wenn das Keillager in seiner Gesamtheit nicht rotationssymmetrisch ist, etwa weil die Hülse zu ihrer Außenfläche hin oval oder mit Vorsprüngen ausgestaltet ist. Ein rotationssymmetrischer Elastomerkörper erlaubt große rotatorische Auslenkungen des Kernes gegenüber der Hülse. Darüber hinaus ist auch die Montage eines Keillagers mit rotationssymmetrischem Elastomerkörper gegenüber einem Keillager mit asymmetrischem Elastomerkörper vereinfacht, da ein solches Lager nicht zwangsläufig orientiert eingepresst werden muss.

Es ist aber auch denkbar, dass das Lager mindestens zwei Elastomerkörper aufweist, die insbesondere einander diametral gegenüberliegend im Lager angeordnet sind. Diese zwei oder beispielsweise vier auch Elastomerkörper können jeweils auch als "Elastomerpaar" bezeichnet werden. Dabei kann es sich bei einem Elastomerpaar um zwei oder mehrere vollständig separate Elastomerkörper handeln oder um Elastomerkörper, die zwar funktional als separate Körper ausgebildet sind, die aber über dünne Gummispuren miteinander verbunden sind und somit im Wesentlichen als ein Bauteil aufgefasst werden können. Mithilfe von Elastomerkörpern, die tatsächlich oder zumindest funktional als separate Körper ausgestaltet sind, können die spezifischen Federungsanforderungen verschiedener Keillager optimal bedient werden, insbesondere wenn für die radialen Richtungen senkrecht zur zentralen Längsachse Z unterschiedliche Freiwege und Steifigkeitsverläufe gefordert werden.

Denkbar ist auch, dass die Hülse im Längsschnitt an einer Innenseite in Richtung der zweiten Stirnseite des Lagers mindestens eine Stufe aufweist, wobei die Stufe insbesondere wellenförmig ausgebildet ist. Die insbesondere wellenförmig ausgebildete Stufe an der Innenseite der Hülse führt zu der erfindungsgemäßen Ausgestaltung der Elastomerspur mit einem verengten Bereich und mindestens einem erweiterten Bereich, da der Elastomerkörper vollständig an der Innenseite der Hülse anliegt und dort stoffschlüssig anvulkanisiert sein kann. Die Geometrie der Innenseite der Hülse bedingt also die hülsenseitige Geometrie des Elastomerkörpers und umgekehrt. Die Hülse kann im Übrigen auch als Außenhülse oder Außenrohr bezeichnet werden. Als Innenseite der Hülse ist die Seite zu verstehen die dem Kern beziehungsweise der zentralen Längsachse Z zugewandt ist und an der zumindest abschnittsweise der Elastomerkörper anliegt oder anvulkanisiert ist.

Gemäß einer weiteren Ausgestaltung kann vorgesehen sein, dass der Kern im Längsschnitt an einer Umfangsseite mindestens eine Erhebung aufweist, wobei die Erhebung insbesondere wellenförmig ausgebildet ist. Bevorzugt ist die insbesondere wellenförmige Erhebung entlang der Umfangsseite des Kerns als eine Art Höcker oder Buckel ausgestaltet. Die wellenförmig ausgebildete Erhebung an der Umfangsseite des Kerns ermöglicht die erfindungsgemäße Ausgestaltung der Elastomerspur mit einem verengten Bereich und mindestens einem erweiterten Bereich, da der Elastomerkörper vollständig an der Umfangsseite des Kerns anliegt und insbesondere dort stoffschlüssig anvulkanisiert sein kann. Die Geometrie der Umfangsseite des Kerns bedingt also die kernseitige Geometrie des Elastomerkörpers und umgekehrt. Als Umfangsseite des Kerns ist die Seite zu verstehen, die der Hülse zugewandt beziehungsweise von der zentralen Längsachse Z abgewandt ist und an der zumindest abschnittsweise der Elastomerkörper anliegt und anvulkanisiert sein kann.

Bevorzug ist das Lager derart ausgestaltet, dass der verengte Bereich der Elastomerspur im unbelasteten Zustand des Lagers im Wesentlichen zwischen der Stufe der Hülle und der Erhebung des Kerns ausgebildet ist. Wenn sich Erhebung und Stufe im unbelasteten Zustand des Keillagers gegenüberliegen, ist in diesem Bereich der Abstand zwischen der Innenseite der Hülse und der Umfangsseite des Kerns am kleinsten. Hieraus folgt, dass die Spurdicke der Elastomerspur des Elastomerkörpers, der zwischen Kern und Hülse angeordnet ist, an dieser Stelle ebenfalls am kleinsten ist. Im unbelasteten Zustand des Lagers liegen die Stufe und die Erhebung im Wesentlichen entlang der zentralen Längsachse Z auf derselben senkrecht zu Z liegenden Linie, die auch als Querachse Q bezeichnet werden kann. Darüber hinaus kann eine zentrale Querachse QZ definiert werden, die im unbelasteten Zustand des Lagers durch den geometrischen Mittelpunkt der Punkte des Lages verläuft, durch welche die zentrale Längsachse Z in das Lager ein- und austritt.

Darüber hinaus kann vorgesehen sein dass der verengte Bereich der Elastomerspur im unbelasteten Zustand des Lagers entlang der Keilachse K im Wesentlichen mittig zwischen der ersten Stirnseite und der zweiten Stirnseite des Lagers liegt, also im Wesentlichen auch auf Höhe der zentralen Querachse QZ. Liegt der verengte Bereich entlang der Keilachse K im Wesentlichen mittig zwischen der ersten Stirnseite und der zweiten Stirnseite des Lagers, können zu beiden Stirnseiten des Lagers hin jeweils erweiterte Bereiche liegen. Hierdurch werden die positiven Eigenschaften des erfindungsgemäßen Elastomerkörpers zusätzlich verbessert, da Belastungen des Elastomerkörpers an den Stirnseiten des Lagers und in den Haftzonen im Bereich der Stirnseiten noch effizienter reduziert werden.

Das Lager kann ferner derart ausgestaltet sein, dass die Hülse an der ersten Stirnseite einen Kragen aufweist, welcher sich von der Hülse aus in radialer Richtung erstreckt und welcher bevorzugt senkrecht zur zentralen Längsachse Z verläuft. Der Kragen dient unter anderem als Formschluss des Lagers zwischen Hülse und Hülsenaufnahme und sorgt somit für eine zuverlässige und belastbare Festlegung des Lagers im Fahrzeug für die Belastungszustände, bei denen das breite Ende des Kernes in die Hülse eintaucht.

Es kann insbesondere vorgesehen sein, dass der keilförmige Kern von der ersten Stirnseite des Lagers in Richtung der zweiten Stirnseite zuläuft beziehungsweise, dass sich der keilförmige Kern von der ersten Stirnseite des Lagers in Richtung der zweiten Stirnseite verjüngt. Mit anderen Worten: Der Abschnitt des Kerns mit dem größten Außendurchmesser ist im Bereich der ersten Stirnseite des Lagers ausgebildet, der Abschnitt des Kerns mit dem kleinsten Außendurchmesser ist im Bereich der zweiten Stirnseite des Lagers ausgebildet. Der Kern ist darüber hinaus zur Fixierung des Lagers mittels eines Befestigungselementes wie zum Beispiel einer Schraube an einem Bauteil ausgebildet, beispielsweise an einer Fahrzeugkarosserie, an einem Rahmen oder an einem Batterieträger. Hierfür kann der Kern ein Durchgangsloch aufweisen.

Gemäß einer Weiterentwicklung kann vorgesehen sein, dass die Spurdicke der Elastomerspur in einem ersten erweiterten Bereich größer ist als die Spurdicke der Elastomerspur in einem zweiten erweiterten Bereich, wobei der erste erweiterte Bereich an einem kragenseitigen Ende in der Elastomerspur ausgebildet ist und wobei der zweite erweiterte Bereich an einem kragenentfernten Ende der Elastomerspur ausgebildet ist. Hierdurch kann gewährleistet werden, dass die Dehnungskonzentrationen, die vor allem im Bereich des kragenseitigen Endes des Elastomerkörpers auftreten, wenn das breite Ende des Kernes in die Hülse eintaucht und dabei Elastomer entgegen der Eintauchrichtung aus dem Lager verdrängt wird, gegenüber vorbekannten Lösungen reduziert werden.

Denkbar ist auch, dass die Spurdicke der Elastomerspur im ersten erweiterten Bereich und/oder im zweiten erweiterten Bereich mindestens einer hülsenseitigen Ausnehmung folgt, bevorzugt bogenförmig verläuft. Dabei kann vorgesehen sein, dass die Spurdicke der Elastomerspur vom verengten Bereich in Richtung des zweiten erweiterten Bereichs und/oder in Richtung des ersten erweiterten Bereichs kontinuierlich beziehungsweise gleichmäßig zunimmt. Eine kontinuierliche Zunahme der Spurdicke der Elastomerspur vom verengten Bereich in Richtung des zweiten erweiterten Bereichs sorgt, im Gegensatz zu einer plötzlichen Zunahme, für eine optimale Verteilung der Schubkräfte und Dehnungen im Bereich der Haftzone, wenn der Kern mit seinem breiten Ende in die Hülse einfedert.

Das Lager kann außerdem derart ausgestaltet sein, dass die Spurdicke der Elastomerspur im ersten erweiterten Bereich und/oder im zweiten erweiterten Bereich mindestens einer kernseitigen Ausnehmung folgt, die bevorzugt bogenförmig verläuft.

Vorteilhafterweise kann vorgesehen sein, dass die maximale Spurdicke der Elastomerspur zwischen zwei Punkten P8 und P9 liegt, wobei der Punkt P8 in der hülsenseitigen Ausnehmung angeordnet ist und wobei der Punkt P9 insbesondere in der bogenförmigen kernseitigen Ausnehmung 17 angeordnet ist. Durch derart ausgebildete tiefe Ausnehmungen lassen sich sowohl die Dehnungen in den Haftzonen als auch die Dehnungskonzentrationen an den stirnseitigen Oberflächen des Elastomerpolsters 4 besonders gut reduzieren.

Gemäß einer bevorzugten Ausführungsform sind die kernseitige Ausnehmung und/oder die hülsenseitige Ausnehmung als besonders ausgeprägte Erweiterungen oder Taschen ausgebildet, welche nicht konstant verlaufen, sich also nicht stetig erweitern. Sich stetig erweiternde Ausnehmungen würden hülsenseitig dazu führen, dass die Hülse selbst breiter ausgebildet werden müsste, was zu einem Bauraumkonflikt führen kann. Im Falle der kernseitigen Ausnehmung reduziert eine stetige Erweiterung die Breite des Kerns, sodass die jenseits der KO-Lage gewünschte Progression nicht mehr ausreichend eingestellt werden kann. Durch derart ausgebildete "tiefe" Taschen lassen sich sowohl die Dehnungen in den Haftzonen als auch die Dehnungskonzentrationen an den stirnseitigen Oberflächen der Elastomerpolster besonders gut reduzieren, ohne Bauraumkonflikte oder zu geringe Progressionen in Kauf nehmen zu müssen.

Der verengte Bereich der Elastomerspur weist an seiner engsten Stelle im unbelasteten Zustand die Punkte P1 und P2 auf, welche beide auf der Querachse Q liegen. Die Punkte P1 und P2 definieren jeweils dabei Anbindungsstellen der Elastomerspur am Kern (P1) beziehungsweise an der Hülse (P2), wobei zwischen den Punkten P1 und P2 definitionsgemäß der verengte Bereich der Elastomerspur liegt. Die Elastomerspur weist also zwischen P1 und P2 den Bereich ihrer geringsten Spurdicke auf. Im belasteten Zustand (also in der KO-Lage) entspricht Punkt P1' dem Punkt P1, wobei ein Schubwinkel W von der Geraden durch P1 `-P2 und der zentralen Querachse QZ gebildet wird und wobei der Schubwinkel W in der KO-Lage des Fahrzeugs höchstens 45° beträgt. Mit anderen Worten: Der Elastomerkörper ist bevorzugt so eingestellt, dass der Schubwinkel W an der engsten Stelle des Elastomerkörpers zwischen Kern und Außenhülse in der KO-Lage nicht größer als 45° ist. Eine derartige Ausgestaltung sorgt dafür, dass der Elastomerkörper auch bei einer Überlagerung der statischen Vorlast und weiteren dynamischen Lasten noch eine gute Lebensdauer aufweisen kann.

Es ist außerdem denkbar, dass die Umfangsfläche des Kerns zwischen dem Punkt P1 und der ersten Stirnseite einen Punkt P3 aufweist. P3 ist eine Anbindungsstelle der Elastomerspur an der Umfangsseite des Kerns nahe dem verengten Bereich und liegt, ausgehend von P1, in Richtung der ersten Stirnseite des Lagers. Die Mantelfläche des Kerns ist zwischen P1 und P3 im Wesentlichen parallel zur zentralen Längsachse Z ausgebildet. Punkt P3 liegt im belasteten Zustand des Lagers und wenn der Schubwinkel W genau 45° beträgt auf der Querachse durch den Punkt P2, wobei die Umfangsfläche des Kerns zwischen P1 und P3 im Wesentlichen parallel zur zentralen Längsachse Z verläuft. Ein Schubwinkel W von im Wesentlichen 45° stellt die bevorzugte obere Grenze der Auslenkung dar, bis zu der das Lager noch mehr oder weniger linear bzgl. der Axialsteifigkeit federt. Um das zu erreichen, sollte das Lager gemäß einer bevorzugten Ausführungsform in der KO-Lage des Fahrzeugs maximal um die Länge L2 axial ausgelenkt werden. Wenn der Abstand der Hülse im engsten Bereich zwischen P1 und P2 auch unter Einfederung des Lagers um den Weg L2 im Wesentlichen konstant verläuft, wobei dafür der Kern zwischen den Punkten P1 und P3 eine im Wesentlichen zur zentralen Längsachse Z parallel verlaufende Geometrie im Bereich der Elastomeranbindung aufweisen muss, dann ist der axiale Steifigkeitsverlauf bis zu dieser Auslenkung des Lagers um L2 tendenziell linear. Das gilt allerdings nur für den Steifigkeitsanteil an der Gesamtsteifigkeit des Lagers, welcher aus diesem verengten Bereich des Elastomerkörpers herrührt. Selbstverständlich können andere Elastomerbereiche, beispielsweise Axialanschläge, die bereits im Eingriff sind, oder Elastomerbereiche, die bereits große Druckspannungen erzeugen, durch Ihren Beitrag an der Gesamtsteifigkeit dennoch zu einem insgesamt progressiven axialen Steifigkeitsverlauf des Lagers führen.

Darüber hinaus kann vorgesehen sein, dass die Umfangsfläche des Kerns zwischen P1 und P3 höchstens um 3° zu der zentralen Längsachse Z geneigt ist. Mit anderen Worten: Der Kern sollte auf Höhe des verengten Bereichs der Elastomerspur im Wesentlichen eine im Längsschnitt parallel zur zentralen Längsachse Z verlaufende Umfangsfläche aufweisen. Die Umfangsfläche kann aber auch leicht zur zentralen Längsachse Z geneigt sein, beispielsweise aufgrund von Entformungsschrägen, ohne dass der Anteil an der Gesamtsteifigkeit des Lagers aus diesem Elastomerbereich heraus seinen im Wesentlichen linearen Verlauf bis hin zu einer Auslenkung um L2 verliert. Dieser Abschnitt der Umfangsfläche des Kerns zwischen P1 und P3 sollte damit vorzugsweise parallel zur zentralen Längsachse Z verlaufen oder um maximal 3° zur Längsachse Z geneigt sein. Auf diese Weise kann gewährleistet werden, dass die Axialsteifigkeit des Lagers auch in seiner KO-Lage im Wesentlichen linear verlaufen kann, solange keine anderen Elastomerbereiche progressive Steifigkeitsanteile beitragen.

Denkbar ist auch, dass der Elastomerkörper an einem ersten stirnseitigen Ende einen kernseitigen Auslauf und/oder einen hülsenseitigen Auslauf umfasst. Gemäß einer Weiterentwicklung kann analog oder alternativ dazu vorgesehen sein, dass der Elastomerkörper am zweiten stirnseitigen Ende einen hülsenseitigen Auslauf und/oder kernseitigen Auslauf umfasst. Die Ausläufe erhöhen einerseits auf vorteilhafte Weise die Verbindungskraft zwischen dem Elastomerkörper und der Hülse und/oder dem Kern, da sie eine größere Haftzone zur Verfügung stellen, andererseits vermeiden Sie Dehnungskonzentrationen im Bereich der stirnseitigen Anbindung des Elastomerpolsters an Kern und Hülse. Schließlich sind sie fertigungsbedingt vorteilhaft, da hierdurch der Kern und die Hülse einfacher abzudrücken sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Längsschnittansicht eines erfindungsgemäßen Lagers gemäß einer ersten Ausführungsform in unbelastetem Zustand;
- Fig. 2: eine Längsschnittansicht des Lagers aus Fig. 1 unter statischer Last;
- Fig. 3: eine erste Vergleichsansicht der Längsschnittansichten aus Fig. 1 und Fig. 2;
- Fig. 4a: eine zweite Vergleichsansicht der Längsschnittansichten aus Fig. 1 und Fig. 2;
- Fig. 4b: eine Detailansicht der Fig. 4a.

Im Folgenden betreffen Beschreibungen symmetrisch auftretender Bauteile und Geometrien stets beide Bauteile bzw. für beide Geometrien des entsprechenden Symmetriepaares, sofern sich aus dem jeweiligen Kontext nichts Gegenteiliges ergibt.

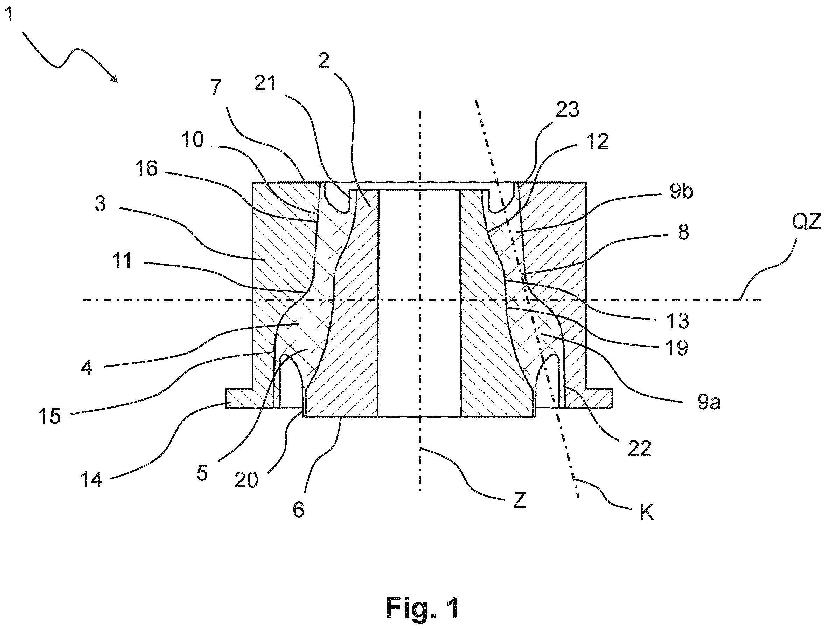

Fig. 1 zeigt eine Längsschnittansicht eines erfindungsgemäßen Lagers 1 gemäß einer ersten Ausführungsform im unbelasteten Zustand. Das gezeigte Lager 1 ist ein elastisches Keillager und umfasst einen Kern 2 mit einem Durchgangsloch, der sich entlang einer zentralen Längsachse Z des Lagers 1 erstreckt und im Wesentlichen im Längsschnitt keilförmig in einer Hülse 3 aufgenommen ist. Wie in Fig. 1 gezeigt, verläuft die Keilachse K des Kerns 2 von der ersten Stirnseite 6 des Lagers 2 in Richtung der zweiten Stirnseite 7, wobei der sich Kern 2 in Richtung der zweiten Stirnseite 7 verjüngt. Der Abschnitt des Kerns 2 mit dem größten Außendurchmesser ist also im Bereich der ersten Stirnseite 6 des Lagers 7 ausgebildet, wohingegen der Abschnitt des Kerns 2 mit dem kleinsten Außendurchmesser im Bereich der zweiten Stirnseite 7 des Lagers 2 ausgebildet ist. Der Kern 2 ist umfangsseitig von einer Hülse 3 umgeben, wobei zwischen dem Kern 2 und der Hülse 3 mindestens ein Elastomerkörper 4 angeordnet ist, welcher im Längsschnitt zwei Elastomerspuren 5 mit abschnittsweise variierenden Spurdicken aufweist.

Die Elastomerspur 5 verläuft entlang der Keilachse K von der ersten Stirnseite 6 zur zweiten Stirnseite 7 des Lagers 1 und weist entlang der Keilachse K einen im Wesentlichen auf Höhe der zentralen Querachse QZ gelegenen verengten Bereich 8 auf, d. h. einen Bereich, dessen Spurdicke geringer ist als die Spurdicken von zwei erweiterten Bereichen 9a,b, die jeweils in stirnseitiger Richtung innerhalb der Elastomerspur 5 ausgebildet sind. Mit anderen Worten: Die Elastomerspur 5 des in Fig. 1 gezeigten Elastomerpolsters 4 ist nicht gleichmäßig dick ausgebildet, sondern verbreitet sich vom verengten Bereich 8 in Richtung des ersten erweiterten Bereichs 9a sowie in Richtung des zweiten erweiterten Bereichs 9b. Auf diese Weise wird verhindert, dass der Elastomerkörper 4 bei zunehmender Einfederung an den Stirnseiten 6, 7 in unerwünschtem Maße belastet und/oder geschädigt wird. Dabei sorgt der erste erweiterte Bereich 9a der Elastomerspur 5 für eine im Vergleich zu herkömmlichen Lösungen reduzierte Dehnungskonzentration sowie für eine reduzierte Faltenbildung am ersten Ende 15 der Elastomerspur 5.

Im weiteren Verlauf in Richtung der ersten Stirnseite 6 nimmt die Dicke des ersten erweiterten Bereiches 9a wieder leicht ab. Das liegt zum einen daran, dass sich die wellenförmige Stufe 11 nicht kontinuierlich bis zur ersten Stirnseite 6 erweitern kann, ohne dass der Durchmesser der Hülse 3 größer sein müsste, was wiederum durch Bauraumrestriktionen verhindert werden könnte. Zum anderen muss der Kern 2 sich in Richtung der ersten Stirnseite 6 verbreitern, damit die Progression des Lagers 1 eingestellt werden kann. Der verbreiterte Kern 2, zusammen mit der stirnseitigen Hülseninnengeometrie, deren Erweiterung nicht beliebig fortgeführt werden kann führt dazu, dass der erweiterte Bereich 9a in Richtung der ersten Stirnseite 6 wieder etwas an Dicke einbüßt.

Die Spurdicke der Elastomerspur 5 des in Fig. 1 gezeigten Lagers 1 ist im verengten Bereich 8 geringer als die Spurdicken von zwei erweiterten Bereichen 9a,b der Elastomerspur 5. So weist die Elastomerspur 5 einen ersten erweiterten Bereich 9a sowie einen zweiten erweiterten Bereich 9b auf, wobei der erste erweiterte Bereich 9a vom verengten Bereich 8 aus in Richtung der ersten Stirnseite 6 des Lagers 1 angeordnet ist und wobei der zweite erweiterte Bereich 9b vom verengten Bereich 8 aus in Richtung der zweiten Stirnseite 7 des Lagers 1 angeordnet ist. Ein derart ausgestalteter Elastomerkörper 4 führt zu einer im Vergleich zu herkömmlichen Keillagern verlängerten Lebensdauer des beanspruchten Keillagers 1.

Der gezeigte Elastomerkörper 4 könnte weitgehend rotationssymmetrisch zur zentralen Längsachse Z ausgebildet sein und weist im Längsschnitt zwei Elastomerspuren 5 auf, die einander diametral gegenüberliegend im Lager 1 angeordnet sind. Ebenso könnte der dargestellte Schnitt ein Lager 1 zeigen, welches nicht rotationssymmetrisch ist, dafür aber zwei sich diametral gegenüberliegende Elastomerspuren 5 aufweist.

Die Hülse 3 des Lagers 1 aus Fig. 1 weist im Längsschnitt an ihrer Innenseite 10 in Richtung der zweiten Stirnseite 7 des Lagers 1 eine wellenförmige Stufe 11 auf. Mit anderen Worten: Der Innendurchmesser der Hülse 3 nimmt von der ersten Stirnseite 6 zur zweiten Stirnseite 7 hin nicht gleichmäßig ab. Vielmehr verläuft die Abnahme des Innendurchmessers zunächst im Bereich der ersten Stirnseite 6 langsam, nimmt dann im Zentralbereich der Elastomerspur 5 zu (wodurch die wellenförmigen Stufe 11 entsteht) und verläuft zur zweiten Stirnseite 7 hin wieder langsam. Durch die wellenförmige Stufe 11 korrespondiert die Innenseite 10 der Hülse 3 mit der Form der Elastomerspur 5, da der Elastomerkörper 4 an der Innenseite 10 der Hülse 3 anliegt und dort insbesondere stoffschlüssig anvulkanisiert sein kann.

Der in Fig. 1 gezeigte Kern 2 weist im Längsschnitt an seiner Umfangsseite 12 eine ebenfalls wellenförmige Erhebung 13 auf, welche bevorzugt als eine Art Höcker oder Buckel entlang der Umfangsseite 12 des Kerns 2 ausgestaltet ist und welche in ihrer Grundform der Stufe 11 der Hülse 3 entsprechen kann. Der Elastomerkörper 4 ist mittels Anvulkanisierens stoffschlüssig an der Umfangsseite 12 des Kerns 2 befestigt.

Dadurch, dass die wellenförmige Erhebung 13 an der Umfangsseite 12 des Kerns 2 und die wellenförmige Stufe 11 der Innenseite 10 der Hülse 3 im unbelasteten Zustand des Lagers im Wesentlichen entlang der zentralen Längsachse Z auf derselben Querachse Q liegen, ist der Abstand zwischen Kern 2 und Hülse 3 in diesem Bereich am geringsten. Hieraus folgt, dass der verengten Bereich 8 der Elastomerspur 5 zwischen der Stufe 11 der Hülle 3 und der Erhebung 12 des Kerns 2 ausgebildet ist. Darüber hinaus ist der verengte Bereich 8 der Elastomerspur 5 im unbelasteten Zustand des Lagers 1 entlang der Keilachse K im Wesentlichen mittig angeordnet, d. h. auf halber Strecke zwischen der ersten Stirnseite 6 und der zweiten Stirnseite 7 des Lagers 1. Hierdurch werden die positiven Eigenschaften des erfindungsgemäßen Elastomerkörpers 4 zusätzlich verbessert, da die ein Verdrängen des Elastomerkörpers 5 an den Stirnseiten 6, 7 des Lagers 1 unter Schubbelastung noch effizienter vermieden wird.

Das Lager 1 gemäß Fig. 1 weist außerdem einen Kragen 14 auf, welcher an der ersten Stirnseite an der Hülse 3 ausgebildet ist. Der Kragen 14 dient unter anderem als Formschluss des Lagers 1 zwischen Hülse 3 und Hülsenaufnahme und sorgt somit für eine zuverlässige und belastbare Befestigung des Lagers 1 im Fahrzeug. Der Kragen 14 verläuft im Wesentlichen parallel zur zentralen Querachse QZ und senkrecht zur zentralen Längsachse Z.

Wie in Fig. 1 gezeigt, ist die Elastomerspur 5 im ersten erweiterten Bereich 9a dicker ist als die im zweiten erweiterten Bereich 9b (und dicker als im verengten Bereich 8), wobei der erste erweiterte Bereich 9a in der Nähe eines ersten, kragenseitigen Endes 15 in der Elastomerspur 5 ausgebildet ist und wobei der zweite erweiterte Bereich 9b in der Nähe eines zweiten, kragenentfernten Endes 16 der Elastomerspur 5 ausgebildet ist. Hierdurch kann gewährleistet werden, dass die Dehnungskonzentrationen, die vor allem im Bereich des ersten (kragenseitigen) Endes 15 des Elastomerkörpers 4 auftreten, wenn das breite Ende des Kernes 2 in die Hülse 3 eintaucht und dabei Elastomer entgegen der axialen Eintauchrichtung aus dem Lager 1 verdrängt wird, gegenüber vorbekannten Lösungen reduziert werden.

Der in Fig. 1 gezeigte Elastomerkörper 4 weist außerdem im Längsschnitt an seinem ersten stirnseitigen Ende 15 einen ersten kernseitigen Auslauf 20 sowie einen ersten hülsenseitigen Auslauf 22 auf. Darüber hinaus weist die Elastomerspur 5 an ihrem zweiten stirnseitigen Ende 16 einen zweiten kernseitigen Auslauf 21 sowie einen zweiten hülsenseitigen Auslauf 23 auf.

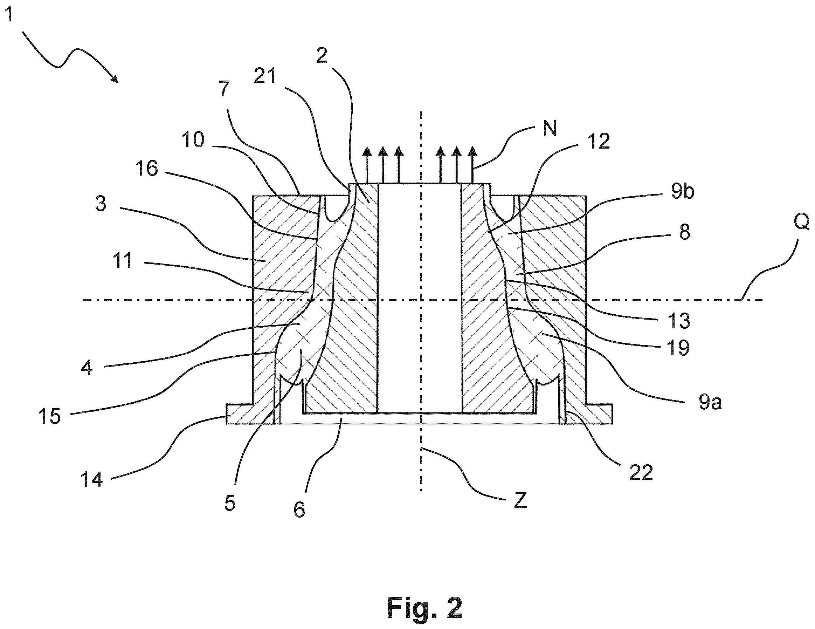

In Fig. 2 ist eine Längsschnittansicht des Lagers 1 aus Fig. 1 unter statischer Last gezeigt. Die statische Last übt dabei eine Kraft aus, die entlang der Längsachse Z, also in Axialrichtung, von der ersten Stirnseite 6 des Lagers in Richtung der zweiten Stirnseite 7 des Lagers 1 wirkt. Der Kraftvektor N der statischen Last ist in Fig. 2 durch die Pfeile dargestellt. Durch die in Axialrichtung wirkende Kraft der statischen Last wird der Kern 2 in Axialrichtung gedrückt - es kommt also zur axialen Einfederung des Kerns 2 in die KO-Lage des Lagers 1.

Die axiale Einfederung des Kerns 2 resultiert in einer Verformung des Elastomerkörpers 4 beziehungsweise zu einer geringfügigen Veränderung der Geometrie der Elastomerspur 5, wobei die Elastomerspur 5 immer noch zwei erweiterte Bereiche 9a,b und einen verengten Bereich 8 aufweist. So liegt die Erhebung 13 der Umfangsseite 12 des Kerns 2 im eingefederten Zustand nicht mehr auf derselben horizontalen Achse wie die Stufe 11 der Innenseite der Hülse 3. Hierdurch kommt es insbesondere zu einer Scherung des verengten Bereichs 8 der Elastomerspur 5, welcher zwischen der Erhebung 13 des Kerns 2 und der Stufe 12 der Hülle 3 ausgebildet ist.

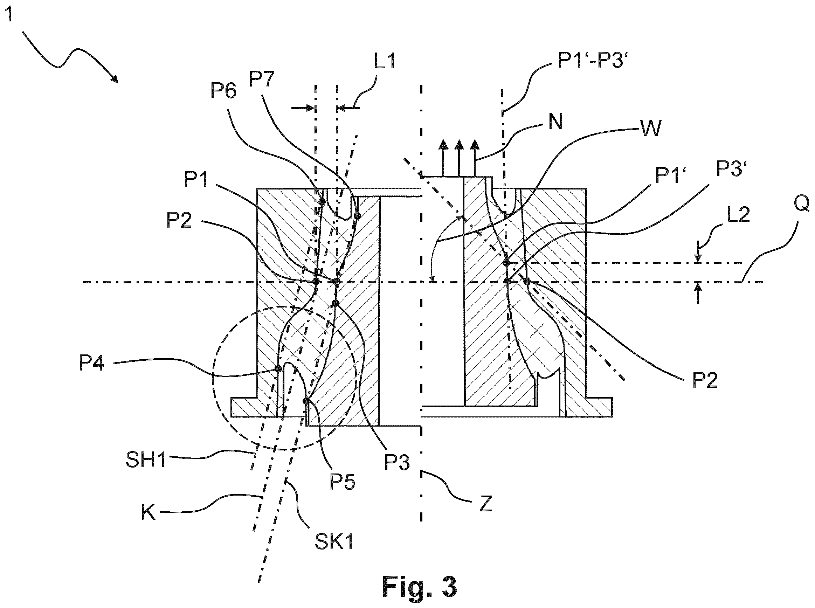

Fig. 3 zeigt eine Vergleichsansicht der Längsschnittansichten aus Fig. 1 und Fig. 2, wobei links der zentralen Längsachse Z ein Lager 1 im unbelasteten Zustand gezeigt ist und rechts zentralen Längsachse Z ein Lager 1 mit eingefedertem Kern 2 gezeigt ist. Zur Verdeutlichung der relativen Positionen von Kern 2, Hülse 3 und Elastomerkörper 4 sind in Fig. 3 außerdem die Punkte P1 bis P3 sowie Bezugslinien der Punkte P1-3 definiert. Dabei definieren die Punkte P1 und P2 jeweils Anbindungsstellen der Elastomerspur 5 am Kern 2 (P1) beziehungsweise an der Hülse 3 (P2), wobei zwischen den Punkten P1 und P2 der verengte Bereich 8 der Elastomerspur 5 im unbelasteten Zustand liegt. Die Elastomerspur 5 weist also zwischen P1 und P2 ihre geringste Spurdicke L1 auf. Die Punkte P1 und P2 liegen außerdem in derselben horizontalen Achse, welche in Fig. 3 der Querachse Q entspricht.

Als P4 ist eine Anbindungsstelle der Elastomerspur 5 an der Innenseite 10 der Hülse 3 nahe der ersten Stirnseite 6 des Lagers 1 definiert. P4 liegt am ersten Ende 15 der Elastomerspur 5 und ist der Punkt entlang der Innenseite 10 der Hülse 3, an dem die Elastomerspur 5 in den hülsenseitige Auslauf 22 übergeht. P4 ist außerdem der Punkt entlang der Innenseite 10 der Hülse 3, an dem der Innendurchmesser der Hülse 3 nahezu am größten ist. Als P6 eine Anbindungsstelle der Elastomerspur 5 an der Innenseite 10 der Hülse 3 nahe der zweiten Stirnseite 7 des Lagers 1 definiert. P6 liegt am zweiten Ende 16 der Elastomerspur 5 und definiert den hülsenseitigen Auslauf 23 an der Engstelle der Hülse 3. P6 ist im Wesentlichen der Punkt entlang der Innenseite 10 der Hülse 3, an dem der Innendurchmesser der Hülse 3 am geringsten ist. Gemäß Fig. 3 erstrecken sich ausgehend von den Punkten P4 und P6 die hülsenseitigen Ausläufe 22, 23 der Elastomerspur 5 nach außen, d. h. im Falle des ersten hülsenseitigen Auslaufs 22 in Richtung der ersten Stirnseite 6 und im Falle des zweiten hülsenseitigen Auslaufs 23 in Richtung der zweiten Stirnseite 7 des Lagers 1. Dabei tragen die hülsenseitigen Ausläufe 22, 23 im Wesentlichen nichts zur Steifigkeit bei, da sie im Verhältnis zur Elastomerspur 5 sehr dünn sind, in Bezug auf ihre Dicke sehr lang sind und nur einseitig stoffschlüssig mit der Hülse oder dem Kern verbunden sind. Die beiden Teile koppeln aber nicht funktionell und übertragen somit kaum Zug-, Druck bzw. Schubspannungen.

Analog dazu sind zwei Punkte P5 und P7 definiert. Dabei ist als P5 eine Anbindungsstelle der Elastomerspur 5 an der Umfangsseite 11 des Kerns 2 nahe der ersten Stirnseite 6 des Lagers 1 und als Beginn des ersten kernseitigen Auslaufs 20 definiert. P5 ist außerdem der Punkt entlang der Umfangsseite 11 des Kerns 2, an dem der Außendurchmesser des Kerns 2 nahezu am größten ist. Als P7 ist die Anbindungsstelle der Elastomerspur 5 an der Umfangsseite 11 des Kerns 2 nahe der zweiten Stirnseite 7 des Lagers 1 definiert und bezeichnet den Beginn des zweiten kernseitigen Auslaufs 21. P7 ist ferner der Punkt entlang der Umfangsseite 11 des Kerns 2, an dem sein Außendurchmesser nahezu am geringsten ist. Ausgehend von den Punkten P5 und P7 erstrecken sich die kernseitigen Ausläufe 20, 21 der Elastomerspur 5 nach außen, d. h. im Falle des ersten kernseitigen Auslaufs 20 in Richtung der ersten Stirnseite 6 und im Falle des zweiten kernseitigen Auslaufs 21 in Richtung der zweiten Stirnseite 7 des Lagers 1.

Durch die Punkte P4 und P6 verläuft die hülsenseitige Sekante SH1, durch die Punkte P5 und P7 die kernseitige Sekante SK1. Die Keilachse K liegt genau mittig zwischen den Sekanten SH1 und SK1 und zeigt damit den mittigen Verlauf der Elastomerspur 5.

Schließlich ist ein Punkt 3 definiert. P3 ist eine Anbindungsstelle der Elastomerspur 5 an der Umfangsseite 11 des Kerns 2 im verengten Bereich 8. P3 liegt, ausgehend von P1, in Richtung der ersten Stirnseite 6 des Lagers 1 und dient in Fig. 3 insbesondere zur Darstellung der axialen Einfederung des Kerns 2 relativ zur Hülse 3. Die Mantelfläche des Kerns 2 ist zwischen P1 und P3 im Wesentlichen zylindrisch ausgebildet.

Wirkt nun eine statische Last auf das Lager 1, so wird der Kern 1 durch die auf ihn wirkende Kraft mit Kraftvektor N in Axialrichtung eingefedert. In Fig. 3 ist dieser Zustand rechts der zentralen Längsachse Z gezeigt. Dabei ist erkennbar, dass der Kern 2 im K0-Zustand im Vergleich zum unbelasteten Zustand um die Strecke L2 eingefedert ist. Der Punkt P3, welcher im unbelasteten Zustand unterhalb der Querachse Q liegt, liegt im eingefederten Zustand als P3' gekennzeichnet auf der Querachse Q und somit im Wesentlichen auf derselben horizontalen Achse wie P2. Durch die Verschiebung des Kerns 2 in Axialrichtung ist die Gerade P1'-P2, welche im unbelasteten Zustand des Lagers 1 der Geraden P1-P2 (nicht gezeigt) entspricht und mit der zentralen Querachse Q übereinstimmt, um einen Schubwinkel W relativ zur Querachse Q gekippt. Der Schubwinkel W beträgt gemäß der Darstellung in Fig. 3 exakt 45°; dabei ist L1 gleich L2. Ein Schubwinkel W von 45° stellt dabei die bevorzugte obere Grenze der Auslenkung dar, bis zu der das Lager 1 noch mehr oder weniger linear bzgl. der Axialsteifigkeit federt.

Darüber hinaus ist bei dem in Fig. 3 gezeigten Lager 1 im eingefederten Zustand die Gerade P1 `-P3`, welche auch der im Wesentlichen zylindrischen Mantelfläche des Kerns zwischen P1 und P3 beziehungsweise zwischen P1' und P3' entspricht, um ca. 3° relativ zur zentralen Längsachse Z geneigt. Auf diese Weise kann zusätzlich gewährleistet werden, dass die axiale Steifigkeit des Lagers 1 in der KO-Lage noch tendenziell linear verläuft. Das gilt allerdings nur für den Steifigkeitsanteil an der Gesamtsteifigkeit des Lagers 1, welcher aus diesem verengten Bereich 8 des Elastomerkörpers 4 herrührt.

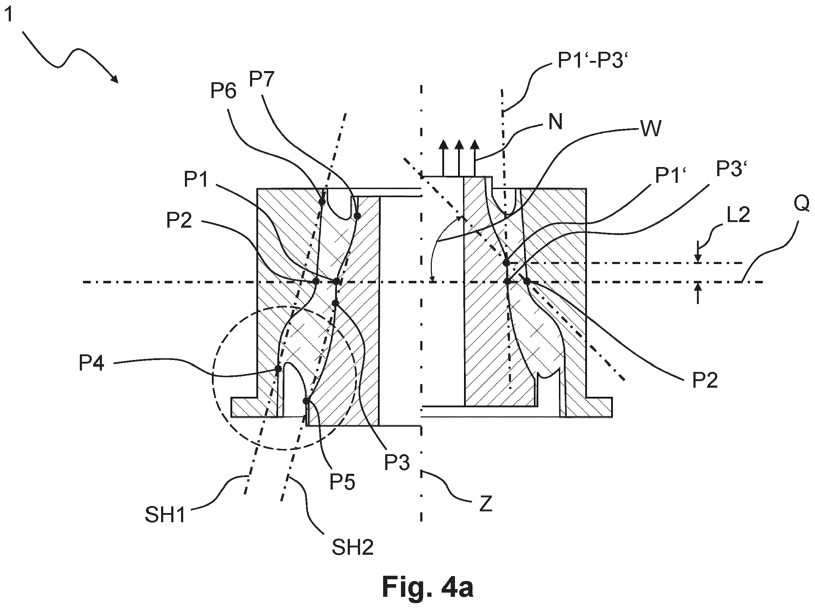

Fig. 4a zeigt eine zweite Vergleichsansicht der Längsschnittansichten aus Fig. 1 und Fig. 2. In Fig. 4a sind zwei Sekanten SH1 und S2 gezeigt. SH1 ist eine hülsenseitige Sekante und verläuft durch die Punkte P4 und P6. SH2 ist eine zu SH1 parallelverschobene Gerade, welche durch Punkt P5 verläuft.

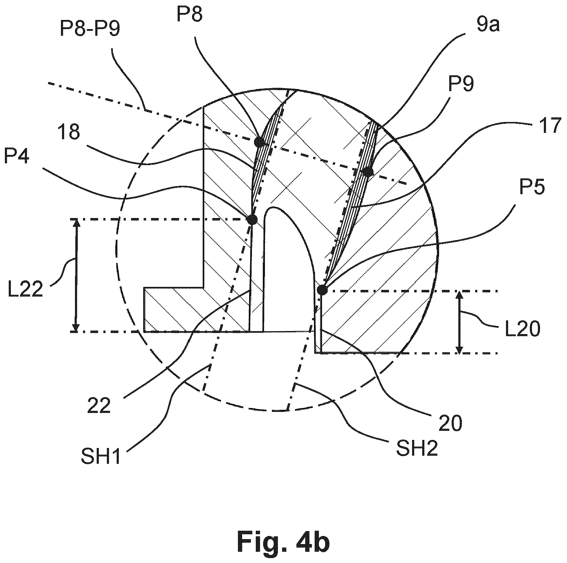

Fig. 4b zeigt eine Detailansicht des ersten erweiterten Bereichs 9a der Elastomerspur 5 des Lagers 1 aus Fig. 4a im unbelasteten Zustand. Dabei sind zum einen die Länge L20 des ersten kernseitigen Auslaufs 20 und die Länge L22 des ersten hülsenseitigen Auslaufs 22 gezeigt. Zum anderen zeigt Fig. 4b die kernseitige Ausnehmungen 17 und die hüllenseitige Ausnehmung 18 im ersten erweiterten Bereich 8. Die Ausnehmung 17 (schraffiert) ist kernseitig ausgebildet und geht an der Umfangsseite 12 des Kerns 2 in die wellenartige Erhebung über (in Fig. 4b nicht gezeigt). Die Ausnehmung 18 (schraffiert) ist hülsenseitig ausgebildet und geht an der Innenseite 11 der Hülse 3 in die wellenartige Stufe über (in Fig. 4b nicht gezeigt).

Wie in Fig. 4b gezeigt, sind die Ausnehmungen 17, 18 in Form von Taschen ausgestaltet. Die taschenförmigen Ausnehmungen 17, 18 erweitern sich nicht stetig, sondern erstrecken sich bogenförmig über die hülsenseitige Sekante SH1 beziehungsweise die parallelverschobene SH2 hinaus. Es ist außerdem denkbar, dass mehrere solcher taschenförmigen Ausnehmungen 17, 18 hülsenseitig oder kernseitig ausgebildet sind. In Fig. 4a ist beispielsweise erkennbar, dass die Sekante SH2 zwei taschenförmige kernseitige Ausnehmungen definiert. In Fig. 4b sind außerdem die Punkte P8 und P9 definiert, wobei die Spurdicke der Elastomerspur 5 entlang der Geraden P8-P9 am größten ist. Dabei ist die Gerade P8-P9 definitionsgemäß senkrecht zu SH1 bzw. SH2 angeordnet. P8 liegt folglich in der bogenförmigen hülsenseitigen Ausnehmung 18. Entsprechend ist P9 der Punkt in der bogenförmigen kernseitigen Ausnehmung 17. Durch derart ausgebildete tiefe Ausnehmungen 17, 18 lassen sich sowohl die Dehnungen in den Haftzonen als auch die Dehnungskonzentrationen an den stirnseitigen Oberflächen des Elastomerpolsters 4 besonders gut reduzieren.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

| | | | |
|---|---|---|---|
| 1 | Lager | P1 | Punkt P1 |
| 2 | Kern | P2 | Punkt P2 |
| 3 | Hülse | P3 | Punkt P3 |
| 4 | Elastomerkörper | P4 | Punkt P4 |
| 5 | Elastomerspur | P5 | Punkt P5 |
| 6 | Erste Stirnseite | P6 | Punkt P6 |
| 7 | Zweite Stirnseite | P7 | Punkt P7 |
| 8 | Verengter Bereich | P8 | Punkt P8 |
| 9 | Erweiterter Bereich | P9 | Punkt P9 |
| 9a | Erster erweiterter Bereich | | |
| 9b | Zweiter erweiterter Bereich | L1 | Geringste Spurdicke |
| 10 | Innenseite | L2 | Einfederungsstrecke |
| 11 | Stufe | L20 | Länge des ersten hülsenseitigen Auslaufs |
| 12 | Umfangsseite | | |
| 13 | Erhebung | L21 | Länge des ersten kernseitigen Auslaufs |
| 14 | Kragen | | |
| 15 | Erstes Ende der Elastomerspur | SH1 | Sekante durch P4 und P6 |
| 16 | Zweites Ende der Elastomerspur | SH2 | Parallele zu SH1 durch P5 |
| 17 | Kernseitige Ausnehmung | | |
| 18 | Hülsenseitige Ausnehmung | SK1 | Sekante durch P5 und P7 |
| 19 | Umfangsfläche | | |
| 20 | Erster kernseitiger Auslauf | | |
| 21 | Zweiter kernseitiger Auslauf | | |
| 22 | Erster hülsenseitiger Auslauf | | |
| 23 | Zweiter hülsenseitiger Auslauf | | |
| Q | Querachse | | |
| K | Keilachse | | |
| Z | Zentrale Längsachse | | |
| QZ | Zentrale Querachse | | |
| U | Längsachse entlang P1' und P3 | | |
| W | Schubwinkel | | |
| N | Kraftvektor der statischen Last | | |

## Patentansprüche

1. Lager (1) zur schwingungsdämpfenden Lagerung einer Komponente eines Fahrwerks, umfassend einen Kern (2), der sich entlang einer zentralen Längsachse Z des Lagers (1) erstreckt und im Wesentlichen im Längsschnitt keilförmig ausgebildet ist, und eine den Kern (2) umfangsseitig umgebende Hülse (3), wobei zwischen dem Kern (2) und der Hülse (3) mindestens ein Elastomerkörper (4) angeordnet ist, wobei der Elastomerkörper (4) im Längsschnitt eine Elastomerspur (5) aufweist, die entlang einer Keilachse K von einer ersten Stirnseite (6) zu einer zweiten Stirnseite (7) des Lagers (1) verläuft, **dadurch gekennzeichnet, dass** die Elastomerspur (5) entlang der Keilachse K mindestens einen verengten Bereich (8) aufweist, wobei die Spurdicke der Elastomerspur (5) im verengten Bereich (8) geringer ist als die Spurdicke mindestens eines erweiterten Bereichs (9) der Elastomerspur (5).

2. Lager nach Anspruch 1, **dadurch gekennzeichnet, dass** die Spurdicke der Elastomerspur (5) im verengten Bereich (8) außerdem geringer ist als die Spurdicken von mindestens zwei erweiterten Bereichen () der Elastomerspur (5).

3. Lager (1) nach einem der vorangegangenen Ansprüche, **dadurch gekennzeichnet, dass** der Elastomerkörper (4) im Wesentlichen rotationssymmetrisch zur zentralen Längsachse Z ist.

4. Lager (1) nach einem der vorangegangenen Ansprüche, **dadurch gekennzeichnet, dass** das Lager mindestens zwei Elastomerkörper (4) aufweist, die insbesondere einander diametral gegenüberliegend im Lager (1) angeordnet sind.

5. Lager (1) nach einem der vorangegangenen Ansprüche, **dadurch gekennzeichnet, dass** die Hülse (3) im Längsschnitt an einer Innenseite (10) in Richtung der zweiten Stirnseite (7) des Lagers (1) mindestens eine Stufe (11) aufweist, wobei die Stufe (11) insbesondere wellenförmig ausgebildet ist.

6. Lager (1) nach einem der vorangegangenen Ansprüche, **dadurch gekennzeichnet, dass** der Kern (2) im Längsschnitt an einer Umfangsseite (12) mindestens eine Erhebung (13) aufweist, wobei die Erhebung (13) insbesondere wellenförmig ausgebildet ist.

7. Lager (1) nach Anspruch 6, **dadurch gekennzeichnet, dass** der verengte Bereich (8) der Elastomerspur (5) im unbelasteten Zustand des Lagers (1) im Wesentlichen zwischen der Stufe (11) der Hülse (3) und der Erhebung (13) des Kerns (2) ausgebildet ist,

8. Lager (1) nach einem der vorangegangenen Ansprüche, **dadurch gekennzeichnet, dass** der verengte Bereich (8) der Elastomerspur (5) im unbelasteten Zustand des Lagers (1) entlang der Keilachse K im Wesentlichen mittig zwischen der ersten Stirnseite (6) und der zweiten Stirnseite (7) des Lagers (1) liegt.

9. Lager (1) nach einem der vorangegangenen Ansprüche, **dadurch gekennzeichnet, dass** die Spurdicke der Elastomerspur (5) in einem ersten erweiterten Bereich (9a) größer ist als die Spurdicke in einem zweiten erweiterten Bereich (9b), wobei der erste erweiterter Bereich (9a) an einem ersten Ende (15) in der Elastomerspur (5) ausgebildet ist und wobei der zweite erweiterte Bereich (9b) an einem zweiten Ende (16) der Elastomerspur ausgebildet ist.

10. Lager (1) nach einem der vorangegangenen Ansprüche, **dadurch gekennzeichnet, dass** die Hülse (3) an der ersten Stirnseite (6) einen Kragen (14) aufweist.

11. Lager (1) nach einem der Ansprüche 9 oder 10, **dadurch gekennzeichnet, dass** die Spurdicke der Elastomerspur (5) im ersten erweiterten Bereich (9a) und/oder im zweiten erweiterten Bereich (9b) mindestens einer hülsenseitigen Ausnehmung (18) folgt.

12. Lager (1) nach einem der Ansprüche 11, **dadurch gekennzeichnet, dass** die maximale Spurdicke der Elastomerspur (5) zwischen zwei Punkten P8 und P9 liegt, wobei der Punkt P8 in der hülsenseitigen Ausnehmung (18) angeordnet ist.

13. Lager (1) nach einem der Ansprüche 9 bis 12, **dadurch gekennzeichnet, dass** die Spurdicke der Elastomerspur (5) im ersten erweiterten Bereich (9a) und/oder im zweiten erweiterten Bereich (9b) mindestens einer kernseitigen Ausnehmung (17) folgt.

14. Lager (1) nach einem der Ansprüche 9 bis 11, **dadurch gekennzeichnet, dass** die Spurdicke der Elastomerspur (5) vom verengten Bereich (8) in Richtung des zweiten erweiterten Bereichs (9b) und/oder in Richtung des ersten erweiterten Bereichs (9a) kontinuierlich zunimmt.

15. Lager (1) nach einem der vorangegangenen Ansprüche, **dadurch gekennzeichnet, dass** der verengte Bereich (8) der Elastomerspur (5) seine engste Stelle zwischen zwei Punkten P1 und P2 aufweist, wobei Punkt P1 eine Anbindungsstelle der Elastomerspur (5) an einer Umfangsfläche (19) des Kerns (2) ist, wobei Punkt P2 eine Anbindungsstelle der Elastomerspur (5) an der Innenseite (10) der Hülse (3) ist, wobei die Punkte P1 und P2 im unbelasteten Zustand des Lagers (1) in einer senkrecht zur Längsachse Z verlaufenden Querachse Q liegen, wobei ein Punkt P1' dem Punkt P1 im belasteten Zustand entspricht, wobei ein Schubwinkel W von der Geraden durch P1 `-P2 und der Querachse Q gebildet wird und wobei der Schubwinkel W in der KO-Lage des Fahrzeugs höchstens 45° beträgt.

16. Lager (1) nach Anspruch 13, **dadurch gekennzeichnet, dass** die Umfangsfläche (19) des Kerns (2) zwischen dem Punkt P1 und der ersten Stirnseite (6) einen Punkt P3 aufweist, wobei Punkt P3 im belasteten Zustand des Lagers (1) und wenn der Schubwinkel W 45° beträgt auf der Querachse Q durch den Punkt P2 liegt, wobei die Umfangsfläche (19) des Kerns zwischen P1 und P3 im Wesentlichen parallel zur zentralen Längsachse Z verläuft.

17. Lager (1) nach Anspruch 14, **dadurch gekennzeichnet, dass** die Umfangsfläche (19) des Kerns (2) zwischen P1 und P3 höchstens um 3° zu der zentralen Längsachse Z geneigt ist.
